# EUROPEAN PATENT APPLICATION

(11) **EP 2 557 805 A2**
(43) Date of publication of application: **13.02.2013**
(21) Application number: 12161728.6
(22) Date of filing: 28.03.2012
(51) Int. Cl.: H04N 21/236

(54) **Method for transmitting extra information in digital broadcast contents and communication apparatus and electronic apparatus using the same**

(30) Priority: 08.08.2011 TW 100128179
(71) Applicant: ITE Tech. Inc, Hsinchu (TW)
(72) Inventor: Wang, Chien-Fa, 112 Taipei City (TW)
(74) Representative: Becker Kurig Straus

(57) **Abstract**

A method for shortening response time of cursor movement in digital broadcast content, a communication apparatus and an electronic apparatus using the same method are proposed. The method is adapted to the communication apparatus or the electronic apparatus, and includes the following steps: acquiring a video content from an electronic apparatus; acquiring a position information of a cursor from the video content; encoding the cursor and the location information into a graphic subtitle by a digital television format subtitle encoder; encoding the video content as an encoded video content; providing a service information (SI)/program specific information (PSI) table; multiplexing the encoded video content, the graphical subtitle and the SI/PSI table into a transport stream; and transmitting the transport stream.

## Description

### BACKGROUND OF THE INVENTION

### Field of the Invention

The invention relates to a method for transmitting extra information in digital broadcast contents, a communication apparatus using the method, and an electronic apparatus using the method.

### Description of Related Art

Generally, subtitles of digital TV or DVD are used to make viewers easily follow up the content of the show or program. For example, there might be a subtitle of all dialogues translated into our own language for a foreign TV show or movie, and there might be a subtitle of lyrics for a music video (MV). However, the digital TV transmitting technology may be applied to different application, such as a camera and a computer.

For a traditional analog camera or IP camera, recording and transmitting video is basic function, but it is sometimes desired to transmit on-screen-display (OSD) information to a remote host. In operation, the analog camera and IP camera both blend the OSD information into the video that might be damaged during the transmission.

For a traditional computer, if one wants to transmit a desktop of the computer to a remote digital TV because of its bigger screen, a cursor is blended with the desktop first, and then the desktop with the cursor is encoded into digital TV format and transmitted to the digital TV. The digital TV receives the desktop with the cursor, decodes the desktop with the cursor, and then shows it on the screen of the digital TV. Since the encode process and decode process both take some time, the user feels a certain amount of latency if the user moves the mouse, i.e. the cursor is moving correspondingly.

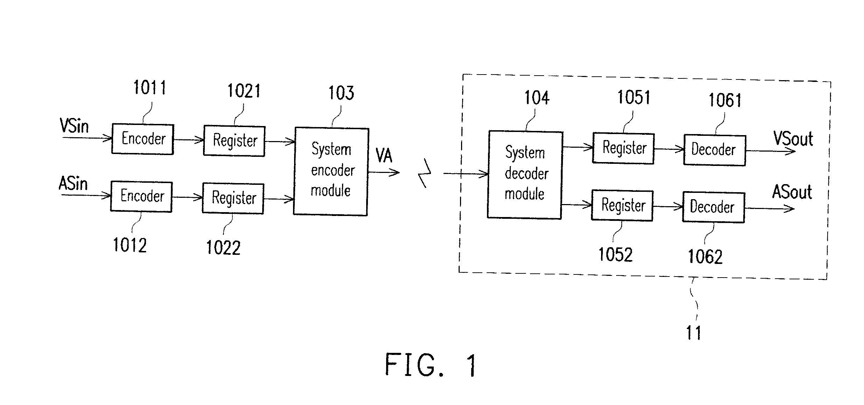

FIG. 1 is a schematic view illustrating a video and audio encoder system. Here, the video and audio encoder system is, for instance, a video compression system under the standard developed by motion picture expert group-2 (MPEG-2). With reference to FIG. 1, when a video input signal VSin and an audio input signal ASin are respectively encoded by encoders 1011 and 1012, the video and audio input signals VSin and ASin are temporarily stored in registers 1021 and 1022 to wait for the required variables and data, and a system encoder module 103 then encodes the video and audio input signals VSin and ASin to obtain video and audio contents VA. The video and audio contents VA are transmitted to a receiving apparatus 11 at a receiving end via a transmission medium (e.g., a wireless transmission medium). After the receiving apparatus 11 receives the video and audio contents VA, a system decoding operation is performed on the received video and audio contents VA by a system decoder module 104. The received video and audio contents VA are temporarily stored in registers 1051 and 1052 to wait for data required for decoding the contents. After the required data are obtained, the video and audio contents VA are decoded by decoders 1061 and 1062 to generate a video output signal VSout and an audio output signal ASout. As a whole, given the speed of the system decoding operation is not taken into consideration, the data contents, when arriving at the registers 1021, 1022, 1051, and 1052, need to wait for the required parameters or data, thus resulting in delayed transmission. Besides, the delayed transmission also occurs when the system transmits the data contents through the transmission medium.

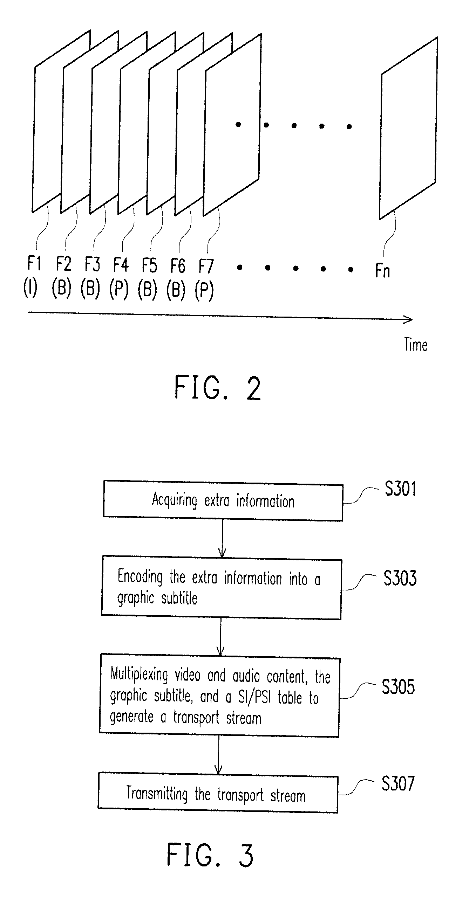

FIG. 2 is a schematic view illustrating a method of encoding a video signal under the MPEG-2 standard, for instance. With reference to FIG. 2, frames Fl∼Fn are arranged from left to right in a time sequence. The frames F1∼Fn include three encoding modes, i.e., I mode, P mode, and B mode. In the I mode, data in the frames F1∼Fn are encoded. In the P mode, data are encoded in a predictive manner, i.e., both the data in the current frame and the data in an earlier frame are required for encoding the data. In the B mode, data are encoded in a bi-directionally predictive manner, i.e., the data in the earlier frame and in the later frame are required for encoding the data. For instance, the frames F1∼F7 at the receiving end are displayed in the time sequence of F1→F2→F3→F4→F5→F6→F7; after the encoding process is carried out, the frames F1∼F7 are arranged in the order of F1(I)→F4(P)→F2(B)→F3(B)→F7(P)→F5(B)→F6(B). Here, the content in each parenthesis represents the encoding mode of the frame.

The video and audio contents VA received at the receiving end (e.g., received by the receiving apparatus 11 as shown in FIG. 1) may be in an encoding order or randomly arranged. However, in the P mode or in the B mode, the decoding action can be performed only after the receiving end receives the reference frame. For instance, in order to perform the decoding action, the frame F4 in the P mode requires the data of the reference frame F1, and the frame F2 in the B mode requires the data of the reference frames F1 and F4. In this case, the delayed transmission also occurs.

Accordingly, if digital TV transmitting technology is applied to a camera or a computer, both of them face some problems. Therefore, a method for transmitting extra information in digital TV broadcast contents which solves the problems above is desired.

### SUMMARY OF THE INVENTION

The invention is directed to a method for transmitting extra information in digital TV broadcast contents. The method may be applied to a communication apparatus, such as a dongle which may be connected to a camera or a computer. The method may also be applied to an electronic apparatus, such as a camera or a computer.

In consistent with an embodiment of the invention, there is provided a method for transmitting extra information in digital TV broadcast contents. The method includes: retrieving video contents (Vin) from an electronic apparatus; encoding the video contents (Vin) into encoded video contents (ENV); providing a service information /program specific information table (SI/PSI); multiplexing the encoded video and audio contents (ENV), a graphic subtitle (GSUB) or a text subtitle (SUB), and the service information/program specific information table (SI/PSI) to generate a transport stream (TS); and transmitting the transport stream (TS). The method is characterized by acquiring the extra information of the electronic apparatus; and encoding the extra information into the graphic subtitle (GSUB) or the text subtitle (SUB).

Several exemplary embodiments accompanied with figures are described in detail below to further describe the disclosure in details.

### BRIEF DESCRIPTION OF THE DRAWINGS

The accompanying drawings are included to provide a further understanding of the disclosure, and are incorporated in and constitute a part of this specification. The drawings illustrate exemplary embodiments of the disclosure and, together with the description, serve to explain the principles of the disclosure.

FIG. 1 is a schematic view illustrating a video and audio encoder system.

FIG. 2 is a schematic view illustrating a method of encoding a video signal.

FIG. 3 is a flowchart illustrating a method for transmitting extra information in digital broadcast contents according to a first embodiment of the invention.

FIG. 4A is a flowchart illustrating a method for transmitting extra information in digital broadcast contents according to a second embodiment of the invention.

FIG. 4B is a flowchart illustrating a method for transmitting extra information in digital broadcast contents according to a third embodiment of the invention.

FIG. 5 is a block diagram illustrating a communication apparatus according to a fourth embodiment of the invention.

FIG. 6 is a block diagram illustrating an electronic apparatus according to a fifth embodiment of the invention.

### DETAILED DESCRIPTION OF DISCLOSED EMBODIMENTS

FIG. 3 is a flowchart illustrating a method for transmitting extra information in digital broadcast contents according to a first embodiment of the invention which can be applied to a system including a transmitter and a receiver. With reference to FIG. 3, in step S301, the extra information, e.g., position information of a cursor or on-screen-display (OSD) information of the transmitter is retrieved (or acquired). In step S303, the cursor and the position information or the OSD information thereof are encoded into a graphic/text subtitle. In step S305, video and audio contents, the graphic/text subtitle, and a SI/PSI table are multiplexed to generate a transport stream. In step S307, the transport stream is transmitted to the receiver.

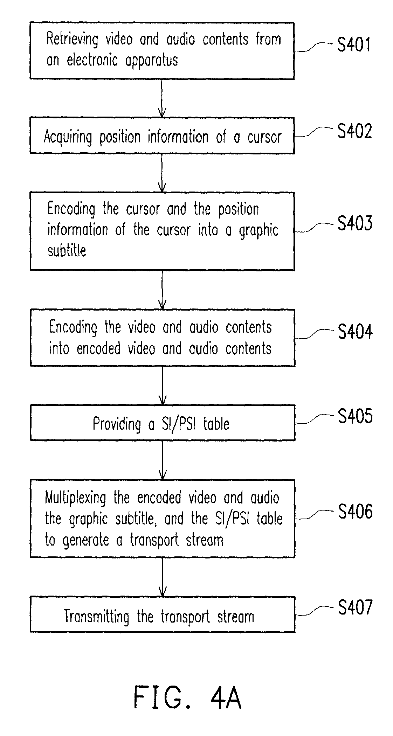

FIG. 4A is a flowchart illustrating a method for transmitting extra information in digital broadcast contents according to a second embodiment of the invention which can be applied to a system including an electronic apparatus and an output apparatus. The process shown in FIG. 4A further elaborates each step indicated in FIG. 3. With reference to FIG. 4A, in step S401, a retrieving unit of a communication apparatus retrieves video and audio contents from the electronic apparatus. Here, the video and audio contents can be extended desktop contents of an operation system in the electronic apparatus or video and audio contents of an operating application. The communication apparatus or an individual transmitter module can be an external wireless communication dongle connected to the electronic apparatus or a wireless communication module installed in the electronic apparatus. Further, the communication apparatus or the individual transmitter module is adapted for transmitting video and audio data of the electronic apparatus to an output apparatus. The electronic apparatus is a computer, a notebook computer, a tablet personal computer (PC), or a smart mobile phone, for instance, which should not be construed as a limitation in this embodiment. The output apparatus is a digital television set, a digital television set up box, or a projector, for instance, which should not be construed as a limitation in this embodiment.

In step S402, the retrieving unit of the communication apparatus acquires (or retrieves) the extra information, e.g., position information of a cursor. For instance, the position information of the cursor can be obtained by inquiring the operation system of the electronic apparatus.

In step S403, a digital television format subtitle encoder of the communication apparatus can encode the cursor and the position information of the cursor into a graphic subtitle. According to this embodiment, the video and audio contents are transmitted in a digital video broadcasting (DVB) format, and the subtitle in the DVB format can include an image and can be displayed at any region on the frames of the video and audio contents. It is note that the image is a bitmap image that indicates the place where the cursor is located, and the bitmap image can reflect the user's current condition of operating the electronic apparatus (or operating the operation system of the electronic apparatus). For instance, the image can be an indicative arrow pointer showing that the user currently executes a program on a display frame, a hourglass icon indicating that the operation system is in a busy state, or a circular icon that is rotated in a clockwise direction or a counter-clockwise direction (i.e., gradient rotation), which should not be construed as a limitation to the invention.

In step S404, the encoder module of the communication apparatus encodes the video and audio contents into encoded video and audio contents. For instance, in this embodiment, the encoder module encodes the video and audio contents to comply with the video and audio compression standard MPEG-2 and then generates the encoded video and audio contents. In step S405, the control module of the communication apparatus provides a service information (SI)/program specific information (PSI) table of the encoded video and audio contents. The SI table and the PSI table are attached information under the DVB standard and the video compression standard MPEG-2, respectively, and the SI table and the PSI table are used by the receiving apparatus for decoding the information of each program in a transport stream and the corresponding section of the program in the transport stream. The receiving apparatus can be a display apparatus, a television set, or a projector, which should not be construed as a limitation to the invention.

In step S406, the multiplexer of the communication apparatus multiplexes the encoded video and audio contents, the graphic subtitle, and the SI/PSI table to generate a transport stream. In step S407, the transmitter module of the communication apparatus transmits the transport stream to the receiving apparatus.

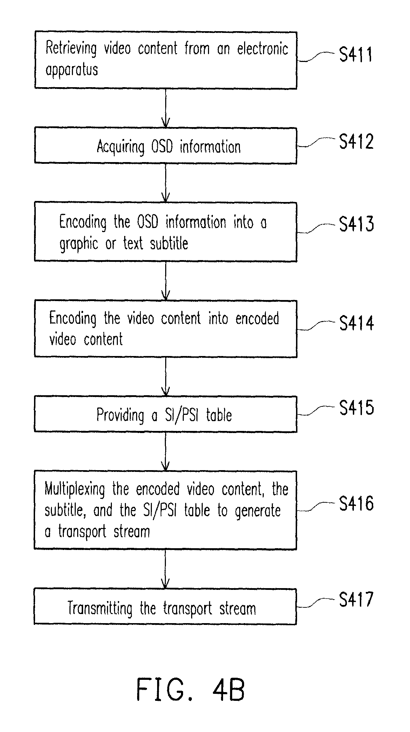

FIG. 4B is a flowchart illustrating a method for transmitting extra information in digital broadcast contents according to a third embodiment of the invention which can be applied to a system including an electronic apparatus and an output apparatus. The process shown in FIG. 4B further elaborates each step indicated in FIG. 3. With reference to FIG. 4B, in step S411, a retrieving unit of a communication apparatus retrieves video content from the electronic apparatus. The communication apparatus or an individual transmitter module can be an external wireless communication dongle connected to the electronic apparatus or a wireless communication module installed in the electronic apparatus. Further, the communication apparatus or the individual transmitter module is adapted for transmitting video content of the electronic apparatus to an output apparatus. The electronic apparatus is a camera or an image recorder, for instance, which should not be construed as a limitation in this embodiment. The output apparatus is a digital television set, a digital television set up box, or a projector, for instance, which should not be construed as a limitation in this embodiment.

In step S412, the retrieving unit of the communication apparatus acquires (or retrieves) the extra information, e.g., on-screen-display (OSD) information. The OSD information may be basic information of the video content, position (GPS location) of the electronic apparatus, recording time of the video content, or retrieving time and date of the video content.

In step S413, a digital television format subtitle encoder of the communication apparatus can encode the basic information of the video content, position of the electronic apparatus, or retrieving time and date of the video content into a graphic subtitle or a text subtitle. According to this embodiment, the video content is transmitted in a digital video broadcasting (DVB) format, an Advanced Television Systems Committee (ATSC) format, or an Integrated Services Digital Broadcasting - Terrestrial (ISDB-T) format. The subtitle in the DVB can be applied as an image format or a text format and can be displayed at any region on the frames of the video content. The ISDB-T and ATSC subtitle can only applied as a text format. It is noted that the image format can be a bitmap image.

In step S414, the encoder module of the communication apparatus encodes the video content into encoded video content. For instance, in this embodiment, the encoder module encodes the video content to comply with the video compression standard MPEG-2 and then generates the encoded video content. In step S415, the control module of the communication apparatus provides a service information (SI)/program specific information (PSI) table of the encoded video content. The SI table and the PSI table are attached information under the DVB/ISDB-T/ATSC standard and the video compression standard MPEG-2, respectively. The SI table and the PSI table are used by the receiving apparatus for decoding the information of each program in a transport stream and the corresponding section of the program in the transport stream. The receiving apparatus can be a display apparatus, a television set, or a projector, which should not be construed as a limitation to the invention.

In step S416, the multiplexer of the communication apparatus multiplexes the encoded video content, the graphic subtitle or the text subtitle, and the SI/PSI table to generate a transport stream. In step S417, the transmitter module of the communication apparatus transmits the transport stream to the receiving apparatus.

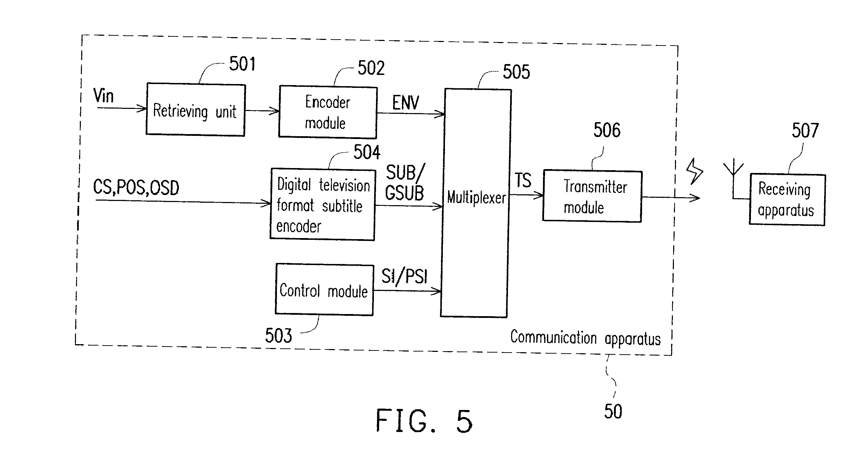

FIG. 5 is a block diagram illustrating a communication apparatus according to a fourth embodiment of the invention. With reference to FIG. 5, the communication apparatus 50 includes a retrieving unit 501, an encoder module 502, a control module 503, a digital television format subtitle encoder 504, a multiplexer 505, and a transmitter module 506. The communication apparatus 50 is connected to an electronic apparatus (not shown in FIG. 5) or installed in an electronic apparatus (not shown in FIG. 5) for transmitting video and/or audio contents of the electronic apparatus to a receiving apparatus 507. The electronic apparatus is a computer, a notebook computer, a tablet PC, or a smart mobile phone, a camera, for instance, which should not be construed as a limitation in this invention. Further, the communication apparatus 50 is adapted for conducting the method for shortening the response time of the cursor movement in the digital broadcast contents, as illustrated in FIG. 3 and FIG. 4A. And, the communication apparatus 50 is adapted for conducting the method for shortening the searching time of video contents which may be stored in the receiving apparatus in the digital broadcast contents, as illustrated in FIG. 3 and FIG. 4B.

As indicated in FIG. 5, the retrieving unit 501 is adapted for retrieving video and/or audio contents Vin from the electronic apparatus. The encoder module 502 is connected to the retrieving unit 501, and is adapted for encoding the video and/or audio contents Vin and outputting encoded video and/or audio contents ENV. The encoder module 502 then transmits the encoded video and audio contents ENV to the multiplexer 505. The digital television format subtitle encoder 504 is adapted for receiving extra information, e.g., a cursor CS and position information POS of the cursor CS, or OSD information and encoding the cursor CS and the position information POS of the cursor CS, or the OSD information into a graphic subtitle GSUB or a text subtitle SUB, and transmitting the graphic subtitle GSUB or the text subtitle SUB to the multiplexer 505. The control module 503 is adapted for providing the SI/PSI table and transmitting the same to the multiplexer 505.

The multiplexer 505 is connected to the encoder module 502, the control module 503, and the digital television format subtitle encoder 504, and the multiplexer 505 is adapted for multiplexing the encoded video and/or audio contents ENV, the graphic subtitle GSUB or the text subtitle SUB, and the SI/PSI table to generate a transport stream TS. The transmitter module 506 is connected to the multiplexer 505, and is adapted for transmitting the transport stream TS to the receiving apparatus 507 via a transmission medium. In this embodiment, the receiving apparatus 507 can be a display apparatus capable of receiving digital broadcast contents, e.g., a video output apparatus that can receive contents under the DVB/ISDB-T standard. Alternatively, the receiving apparatus 507 can be an output apparatus, which has capability for outputting the received video and audio contents, a display, a television set, or a projector. The invention is not limited thereto.

In details, if the retrieving unit 501 is retrieving video and audio contents Vin from a computer, the cursor in the operation system of the computer and the corresponding position information of the cursor are retrieved and encoded into the graphic subtitle GSUB, the cursor can be displayed in the form of the subtitle on the receiving apparatus 507 without the much more complex encoding and decoding processes of the video and audio content, such that the response time of the cursor movement can be shortened.

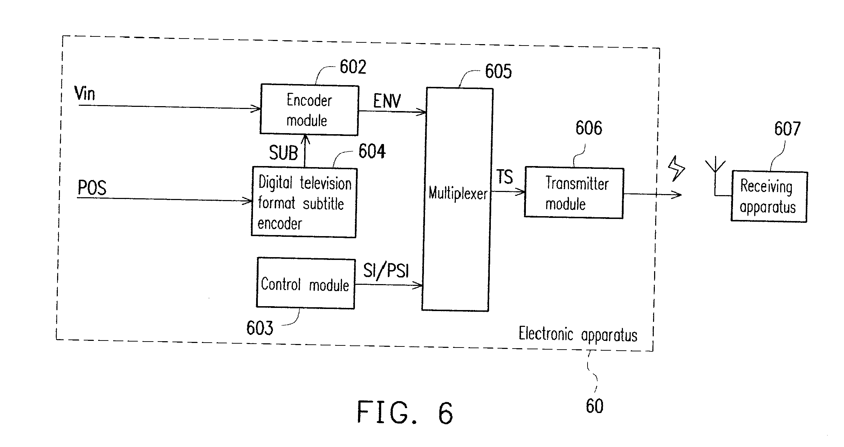

FIG. 6 is a block diagram illustrating an electronic apparatus 60 according to a fifth embodiment of the invention. The electronic apparatus 60 includes an encoder module 602, a digital television format subtitle encoder 604, a control module 603, a multiplexer 605, and a transmitter module 606. The digital television format subtitle encoder 604 is adapted for receiving extra information, e.g., OSD information, such as basic information of the video content, position (GPS location) of the electronic apparatus 60, recording time of the video content, or retrieving time and date of the video content; and the digital television format subtitle encoder 604 is adapted for encoding the OSD information into a text subtitle SUB. The encoder module 602 is connected with the digital television format subtitle encoder 604 and is adapted for receiving video content Vin generated in the electronic apparatus 60 and the text subtitle SUB, and then generating encoded video content ENV in which the text subtitle SUB is embedded. For instance, the video content Vin can be generated by an image sensor of the electronic apparatus 60. The control module 603 is adapted for providing a service information (SI)/program specific information (PSI) table. The multiplexer 605 is connected to the encoder module 602 and the control module 603, and configured for multiplexing the encoded video content ENV and the SI/PSI table to generate a transport stream TS. The transmitter module 606 is connected to the multiplexer 605 for transmitting the transport stream TS to a receiving apparatus 607. In this embodiment, the electronic apparatus 60 can be a camera capable of recording image contents and digital broadcast the image contents under ATSC standard to a receiving apparatus 607. Alternatively, the receiving apparatus 607 can be an output apparatus, which has capability for outputting the received image contents, a display, a television set, or a projector. However, the invention is not limited thereto.

Other details of the fifth embodiment can be referred to as those described in the third embodiment and thus are not reiterated herein.

It will be apparent to those skilled in the art that various modifications and variations can be made to the structure of the disclosed embodiments without departing from the scope or spirit of the disclosure. In view of the foregoing, it is intended that the disclosure cover modifications and variations of this disclosure provided they fall within the scope of the following claims and their equivalents.

## Claims

1. A method for transmitting extra information in digital TV broadcast contents, comprising:
a. retrieving video contents (Vin) from an electronic apparatus;
b. encoding the video contents (Vin) into encoded video contents (ENV);
c. providing a service information /program specific information table (SI/PSI);
d. multiplexing the encoded video and audio contents (ENV), a graphic subtitle (GSUB) or a text subtitle (SUB), and the service information/program specific information table (SI/PSI) to generate a transport stream (TS); and
e. transmitting the transport stream (TS);
**characterized by**
f. acquiring the extra information of the electronic apparatus; and
g. encoding the extra information into the graphic subtitle (GSUB) or the text subtitle (SUB).

2. The method as recited in claim 1, wherein the step f is:
inquiring an operation system of the electronic apparatus and acquiring a cursor (CS) and position information (POS) of the cursor (CS) from the operation system.

3. The method as recited in claim 1, wherein the step f is:
acquiring on-screen-display (OSD) information of the electronic apparatus.

4. The method as recited in claim 3, wherein the OSD information is basic information of the video content, position of the electronic apparatus, or recording time of the video contents.

5. A communication apparatus (50) adapted to transmission of video and audio contents (Vin) of an electronic apparatus, the communication apparatus (50), comprising:
a retrieving unit (501), adapted for retrieving the video and audio contents (Vin) from the electronic apparatus;
an encoder module (502), connected to the retrieving unit (501), adapted for encoding the video and audio contents (Vin) to generate encoded video and audio contents (ENV);
a control module (503), adapted for providing a service information/program specific information table (SI/PSI);
a digital television format subtitle encoder (504), adapted for providing a graphic subtitle (GSUB);
a multiplexer (505), connected to the encoder module (502), the control module (503), and the digital television format subtitle encoder (504), adapted for multiplexing the encoded video and audio contents (ENV), the graphic subtitle (GSUB), and the SI/PSI table to generate a transport stream (TS); and
a transmitter module (506), connected to the multiplexer (505), adapted for transmitting the transport stream (TS);
**characterized by** the digital television format subtitle encoder (504) receives a cursor (CS) of the electronic apparatus and position information (POS) of the cursor (CS) and encodes the cursor (CS) and the position information (POS) of the cursor (CS) into the graphic subtitle (GSUB).

6. The communication apparatus (50) as recited in claim 4, wherein the cursor (CS) and the position information (POS) of the cursor (CS) are from an operation system of the electronic apparatus.

7. An electronic apparatus, comprising:
an encoder module (502), adapted for receiving video and audio contents (Vin) of the electronic apparatus and generating encoded video and audio contents (ENV);
a control module (503), adapted for providing a service information/program specific information table (SI/PSI);
a digital television format subtitle encoder (504), adapted for providing a graphic subtitle (GSUB);
a multiplexer (505), connected to the encoder module (502), the control module (503), and the digital television format subtitle encoder (504), adapted for multiplexing the encoded video and audio contents (ENV), the graphic subtitle (GSUB), and the service information/program specific information table (SI/PSI) to generate a transport stream (TS); and
a transmitter module (506), connected to the multiplexer (505), adapted for transmitting the transport stream (TS);
**characterized by** the digital television format subtitle encoder (504) receives a cursor (CS) of the electronic apparatus and position information (POS) of the cursor (CS) and encodes the cursor (CS) and the position information (POS) of the cursor (CS) into the graphic subtitle (GSUB).

8. The electronic apparatus (60) as recited in claim 7, wherein the cursor (CS) and the position information (POS) of the cursor (CS) are from an operation system of the electronic apparatus (60).

9. A communication apparatus (50) adapted to transmission of video contents (Vin) of an electronic apparatus, the communication apparatus (50), comprising:
a retrieving unit (501), adapted for retrieving the video contents (Vin) from the electronic apparatus;
an encoder module (502), connected to the retrieving unit (501), adapted for encoding the video contents (Vin) to generate encoded video contents (ENV);
a control module (503), adapted for providing a service information/program specific information table (SI/PSI);
a digital television format subtitle encoder (504), adapted for providing a text subtitle (SUB);
a multiplexer (505), connected to the encoder module (502), the control module (503), and the digital television format subtitle encoder (504), adapted for multiplexing the encoded video contents (ENV), the text subtitle (SUB), and the SI/PSI table to generate a transport stream (TS); and
a transmitter module (506), connected to the multiplexer (505), adapted for transmitting the transport stream (TS);
**characterized by** the digital television format subtitle encoder (504) receives recording time information of the video contents and encodes the recording time information of the video contents into the text subtitle (SUB).

10. A communication apparatus adapted to transmission of video contents (Vin) of an electronic apparatus, the communication apparatus, comprising:
a digital television format subtitle encoder, adapted for providing a text subtitle (SUB);
a retrieving unit, adapted for retrieving the video contents (Vin) from the electronic apparatus;
an encoder module, connected to the digital television format subtitle encoder and the retrieving unit, adapted for encoding the video contents (Vin) and the text subtitle (SUB) to generate encoded video contents (ENV);
a control module, adapted for providing a service information/program specific information table (SI/PSI);
a multiplexer, connected to the encoder module and the control module, adapted for multiplexing the encoded video contents (ENV), and the SI/PSI table to generate a transport stream (TS); and
a transmitter module, connected to the multiplexer, adapted for transmitting the transport stream (TS);
**characterized by** the digital television format subtitle encoder receives recording time information of the video contents and encodes the recording time information of the video contents into the text subtitle (SUB).
